# EUROPÄISCHE PATENTSCHRIFT

(11) **EP 1 466 847 B1**
(45) Veröffentlichungstag und Bekanntmachung des Hinweises auf die Patenterteilung: **17.11.2004**
(21) Anmeldenummer: 03008388.5
(22) Anmeldetag: 11.04.2003
(51) Int. Cl.: B65G 49/06

(54) **Verfahren und Vorrichtung zum Umlegen von Glastafeln**
Process and apparatus for laying down glass sheets
Procédé et dispositif pour coucher des feuilles de verre

(43) Veröffentlichungstag der Anmeldung: 13.10.2004
(73) Patentinhaber: Tecnopat AG, 9008 St. Gallen (CH)
(72) Erfinder: Lisec, Peter, 3363 Amstetten-Hausmening (N.Ö.) (AT)
(74) Vertreter: Beer, Manfred

(56) Entgegenhaltungen:
- DE-A- 19 600 348
- FR-A- 2 525 196
- JP-A- 52 059 615
- US-A- 3 399 885

## Beschreibung

Die Erfindung betrifft ein Verfahren und eine Vorrichtung zum Umlegen von tafelförmigen Gegenständen. Insbesondere in Betracht gezogen ist bei der Erfindung das Umlegen von Glasscheiben aus einer gegenüber der Vertikalen um wenige Grade (beispielsweise 5°) "nach hinten" geneigten, also im wesentlichen lotrechten Lage in eine im wesentlichen horizontale Lage.

Dieses Umlegen von tafelförmigen Elementen, wie Glasscheiben, wird in der Glasindustrie vor allem mit Hilfe von Kipptischen ausgeführt. Diese Kipptische sind vergleichsweise aufwendig konstruiert und müssen nach jedem Umlegen einer Glasscheibe in eine horizontale Lage wieder aufgerichtet werden, um für das Umlegen einer weiteren Glastafel richtig ausgerichtet zu sein. Daher arbeiten die bekannten Kipptische auch langsam (lange Taktzeiten) (siehe Dokument DE 196 00 348 A1 und FR 2 525 196).

In der Glasindustrie ist es auch bekannt, Glasscheiben einfach durch "Umfallen lassen" aus einer im wesentlichen lotrechten Lage in eine horizontale Lage auf einer Auflagefläche umzulegen (siehe Dokument US 3 399 885).

Problematisch bei bekannten Vorrichtungen ist es, dass diese Glasscheiben mit im wesentlichen lotrechter Ausrichtung, in der sie beispielsweise in einem Glaslager stehen kommen, aufnehmen, dann die Glasscheiben aus dieser Schräglage über eine genau lotrechte Lage in eine entgegengesetzte Schräglage verschwenken und dann umfallen lassen. Diese Arbeitsweise ist erforderlich, wenn Glasscheiben eine "schönere" Vorderseite (beispielsweise mit einer Beschichtung) und eine weniger "schöne" Hinterseite besitzen. In Anlagen zum Vorbereiten von Glasscheiben, wie Glaswaschmaschinen, Glaslagern u.dgl. sind die Glasscheiben so ausgerichtet, dass die "schöne" Seite so ausgerichtet ist, dass sie von Transportmitteln bzw. Greifern, welche die Glasscheiben aufnehmen, nicht berührt werden. Dies gilt insbesondere auch für mit einer (Metall-)Beschichtung versehenen Glasscheiben. Diese Glasscheiben sollen so zu liegen kommen, dass ihre "schönere" Seite dann nach oben weist.

Der Erfindung liegt die Aufgabe zu Grunde, ein Verfahren und eine Vorrichtung der eingangs genannten Gattung anzugeben, das einfach und ohne erheblichen konstruktiven Aufwand ausgeführt werden kann und dennoch ein schonendes und rasches Umlegen von Glasscheiben möglich macht.

Gelöst wird diese Aufgabe erfindungsgemäß mit einem Verfahren, das die Merkmale von Anspruch 1 aufweist.

Bevorzugte und vorteilhafte Ausgestaltungen des erfindungsgemäßen Verfahrens sind Gegenstand der Verfahrensunteransprüche.

Insoweit die Vorrichtung betroffen ist, wird die erfindungsgemäße Aufgabe mit einer Vorrichtung gelöst, welche die Merkmale des unabhängigen Vorrichtungshauptanspruches aufweist.

Bevorzugte und vorteilhafte Ausgestaltungen der erfindungsgemäßen Vorrichtung sind Gegenstand der Unteransprüche.

Bei der erfindungsgemäßen Arbeitsweise wird die Glasscheibe "nach hinten" umfallen gelassen, das bedeutet, sie fällt nach der Seite um, zu der sie bereits gegenüber der Lotrechten (etwas) geneigt ist. Dabei ist es bei der Erfindung von Vorteil, wenn die Glasscheibe so ausgerichtet wird, in der gegenüber der Lotrechten geringfügig schräggestellten Stellung (Ausgangsstellung) die "schönere" Seite, die gegebenenfalls eine Beschichtung trägt, nach oben weist, so dass diese Seite der umgelegten Glasscheibe dann ebenfalls nach oben weist. Dies wird alles einfach erreicht, indem die Glasscheibe eben "nach hinten" umfallen gelassen wird. Es ist also bei der Erfindung im allgemeinen nicht erforderlich Glasscheiben aus einer Lage, in der sie zur Lotrechten nach einer Seite hin geneigt sind, aufzurichten und dann erst auf die andere Seite hin umfallen zu lassen.

Im einzelnen kann bei der Erfindung so vorgegangen werden, dass die Glastafel unten auf einer Fördereinrichtung aufstehend und oben an einer Stützeinrichtung, die gegebenenfalls mit einer Rollenzeile ausgestattet ist, anliegend in die Ausgangsstellung bewegt wird, aus der sie dann umfallen gelassen wird.

Bei der erfindungsgemäßen Arbeitsweise kann die Fördereinrichtung, auf der die Glastafel mit ihrem unteren Rand aufsteht, im wesentlichen senkrecht zur Spur der Glasscheibe (unterer Rand) verstellbar sein. Durch diese Maßnahme kann die Glasscheibe in der Ausgangsstellung relativ zur Auflagefläche, auf die hin die Glasscheibe umfallen gelassen wird, so ausgerichtet werden, dass die Glasscheiben, nachdem sie umgefallen sind, auf der Auflagefläche unabhängig von ihrer Größe in einer vorbestimmbaren Lage zu liegen kommen und ausgerichtet sind. So kann der Umstand berücksichtigt werden, dass größere Glasscheiben, nachdem sie umgefallen sind, in Fallrichtung auf der Auflagefläche noch ein Stück weitergleiten, wobei dieses Stück größer ist als das Stück, um das kleinere Glasscheiben gleiten. Um die Schräglage, aus der die Glasscheibe fallengelassen wird, auch beim Verstellen der unteren Fördereinrichtung konstant zu halten, kann die Abstützung des oberen Randes der Glasscheibe ebenfalls in horizontaler Richtung verstellbar sein.

Um eine in die für das Fallenlassen vorgesehene Ausgangslage gebrachte Glasscheibe fallen zu lassen genügt es, die Abstützung vom oberen Rand der Glasscheibe zu entfernen, was beispielsweise dadurch geschehen kann, dass diese Abstützung nach oben aus dem Bereich der Glasscheibe wegbewegt wird.

Die beschriebene Möglichkeit, die Ausgangslage der Glasscheibe an deren Größe anzupassen, mit dem Ziel, dass sich der zuvor untere Rand der Glasscheibe nach dem Umfallen der Glasscheibe auf der Auflagefläche in einer vorbestimmbaren Lage befindet, ist insbesondere von Vorteil, wenn die Glasscheibe von der Auflagefläche mit Hilfe von Fördereinrichtungen wegbewegt wird, da die Glasscheibe in einer definierten Referenzlage auf der Auflagefläche liegt. Dies ist insbesondere von Vorteil, wenn die Glasscheibe von der Auflagefläche im wesentlichen parallel zum vorher (d.h. in der Ausgangslage) unteren Rand der Glasscheibe weitergefördert werden soll.

Die Auflagefläche kann schrägstellbar sein, wobei das Schrägstellen einerseits das Ausmaß des Fallens der Glasscheibe bestimmt (also den Winkel, um den sich die Glasscheibe beim Fallenlassen verschwenkt). Anderseits kann dadurch der von der Fördereinrichtung abgekehrte Rand der Auflagefläche so ausgerichtet werden, dass ein problemloser Transport der Glasscheibe in eine nachgeschaltete Vorrichtung möglich ist, auch wenn diese höher ist als die Auflagefläche.

Insoweit die erfindungsgemäße Vorrichtung betroffen ist, ist die Transporteinrichtung, auf welcher der untere Rand der Glasscheibe aufsteht, entweder eine Rollenzeile oder ein Förderband, wobei die Transporteinrichtung bevorzugt auf einer Führung quer zur Förderrichtung verstellbar ist.

Die Einrichtung zum Abstützen des oberen Randes der Glasscheibe in der Ausgangslage ist in einer Ausführungsform eine Reihe von (frei drehbaren) Rollen oder ein endloser Gurt, die auf einem Balken, der höhenverstellbar montiert ist, angeordnet sind. Dabei weisen die Rollen oder der Gurt bevorzugt vom Balken lotrecht nach unten. Die Form der Rollen ist an sich beliebig, wobei Konusrollen oder zylinderförmige Rollen ebenfalls in Betracht gezogen sind.

Die Abstützeinrichtung für den oberen Rand der Glasscheibe in ihrer Ausgangslage kann auch horizontal verstellbar sein. In einer Ausführungsform ist dieses Verstellen mit dem Verstellen der unteren Fördereinrichtung synchronisiert, so dass die Glasscheibe in der Ausgangslage stets den gleichen Winkel zur Lotrechten einnimmt.

Weitere Einzelheiten und Merkmale der Erfindung ergeben sich aus der nachstehenden Beschreibung eines bevorzugten Ausführungsbeispieles anhand der schematischen (nicht maßstäblichen) Zeichnungen.

### Es zeigt:

Fig. 1 in Schrägansicht eine erfindungsgemäße Vorrichtung zum freien Fallenlassen von Glasscheiben, um diese aus einer im wesentlichen lotrechten Lage in eine im wesentlichen horizontale Lage umzulegen und

Fig. 2 die Vorrichtung aus Fig. 1 von links der Fig. 1 aus gesehen.

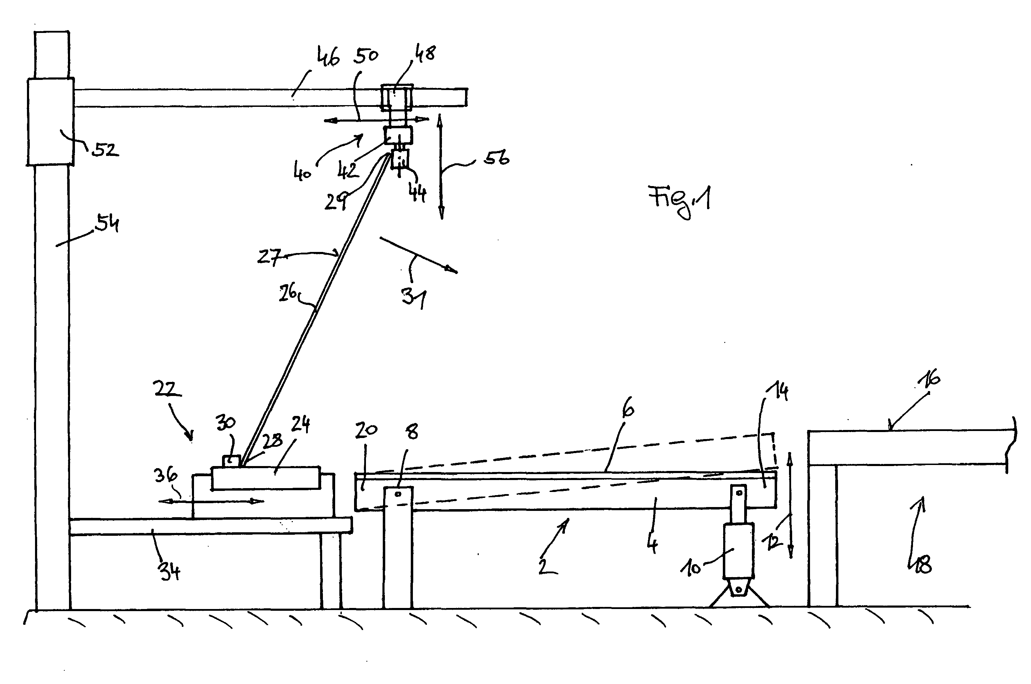

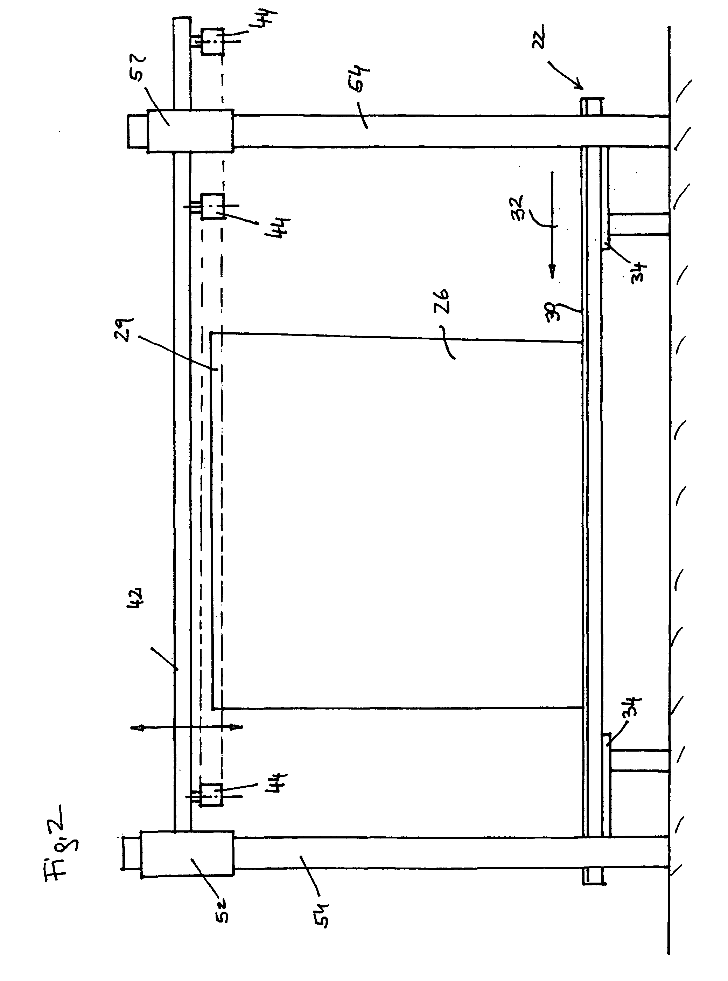

Die in den Fig. 1 und 2 gezeigte Vorrichtung zum Umlegen von Glasscheiben 26 in eine im wesentlichen horizontale Lage besitzt als Auflagefläche einen Tisch 2 mit einer Tischplatte 4, an deren Oberseite eine dämpfende Auflage 6 vorgesehen ist. Die dämpfende Auflage 6 kann beispielsweise eine Filzauflage sein. Der Tisch 2 kann als Luftkissentisch ausgebildet sein, um den Abtransport von auf ihn umgelegten Glasscheiben von Tisch 2 weg zu erleichtern. In den Tisch 2 können auch Fördermittel, wie versenkbare und anhebbare Förderbänder oder Förderrollen oder -walzen, integriert sein.

Die Tischplatte 4 ist an ihrem in Fig. 1 linken Rand um eine Achse 8 mit Hilfe von Druckmittelmotoren 10 in Richtung des Doppelpfeiles 12 verstellbar, so dass der Tisch 2 aus einer im wesentlichen horizontalen Lage in eine in Fig. 1 strichliert eingezeichnete schräggestellte Lage verschwenkt werden kann. In dieser Lage ist der in Fig. 1 rechte Rand 14 der Tischplatte 4 im wesentlichen in der gleichen Höhe angeordnet wie die Arbeitsfläche 16 einer in Fig. 1 gezeigten, nachgeordneten Vorrichtung 18.

Neben dem in Fig. 1 linken Rand 20 des Tisches 2 ist eine Fördereinrichtung 22 vorgesehen. Die Fördereinrichtung 22 kann als Fördermittel 24 ein Endlosförderband oder drehangetriebene Rollen aufweisen. Als Fördermittel sind auch endlose Ketten mit (hakenförmigen) Auflagern für Glasscheiben 26 denkbar. Eine Glasscheibe 26 steht mit ihrem unteren Rand 28 auf dem Fördermittel 24 der Fördereinrichtung 22 auf. Durch eine Führung 30 wird verhindert, dass der untere Rand 28 der Glasscheibe 26 quer zur Förderrichtung der Fördereinrichtung 22 (Pfeil 32 in Fig. 2) auswandert, wenn eine Glasscheibe 26 in die Vorrichtung transportiert wird.

Der obere Rand 29 der Glasscheibe 26 wird von einer Abstützeinrichtung 40 gehalten. Die Abstützeinrichtung 40 besitzt einen Balken 42, an dem nach unten weisend Rollen 44 angeordnet sind. Die Rollen 44 können frei drehbar oder, falls gewünscht, mit einem Drehantrieb zur Unterstützung des Transportes von Glasscheiben 26 ausgestattet sein.

Der Balken 42 ist im gezeigten Ausführungsbeispiel an einer im wesentlichen horizontalen Führung 46 über Schlitten 48 verschiebbar geführt.

Auch die Fördereinrichtung 22 ist auf Führungen 34 in Richtung des Doppelpfeiles 36 (Fig. 1) verstellbar. Durch Verstellen der Fördereinrichtung 22 - oder wenigstens der Führung 30 derselben - in Richtung des Doppelpfeiles 36 und gegebenenfalls zusätzliches Verstellen der Abstützeinrichtung 40 in Richtung des Doppelpfeiles 50 kann eine Glasscheibe 26 in ihrer in Fig. 1 gezeigten Ausgangslage (also bevor sie umfallen gelassen wird) gegenüber dem Tisch 2 ausgerichtet werden. Dabei kommt es insbesondere auf die Ausrichtung des unteren horizontalen Randes 28 der Glasscheibe 26 relativ zum Tisch 2 an. Die Verstellbarkeit der Abstützeinrichtung 40 in Richtung des Doppelpfeiles 50 in Fig. 1 ist lediglich eine fakultative und nicht unbedingt zwingende Maßnahme. Da die Ausgangslage der Glasscheibe 26 relativ zum Tisch 2 durch Verstellen der Transporteinrichtung 22 und gegebenenfalls auch der Abstützeinrichtung 40 gewählt werden kann, kann dem Umstand Rechnung getragen werden, dass größere Glasscheiben 26 nach dem Umfallen auf der Tischplatte 4 weiter, also ein größeres Stück gleiten als kleinere Glasscheiben 26. Durch Wahl der Ausgangslage in Abhängigkeit von der Größe der Glasscheibe 26 kann erreicht werden, dass die Glasscheiben 26 - insbesondere deren vorher untere Rand 28 - auf dem Tisch 2 immer in ein und derselben Lage mit an einer vorgegebenen Stelle angeordnetem unteren Rand 28 der Glasscheibe 26 zu liegen kommen. Dies erleichtert den Abtransport der Glasscheibe, insbesondere wenn der Abtransport senkrecht zur Bildebene der Fig. 1 erfolgen soll.

Die Führungen 46 für die Schlitten 48 der Abstützung 40 sind über Schlitten 52 an lotrechten Führungen 54 in Richtung des Doppelpfeiles 56 auf und ab verstellbar geführt. Diese Verstellbarkeit dient einerseits dazu, die Abstützeinrichtung an die Größe einer Glasscheibe 26 anzupassen und anderseits dazu, die Abstützeinrichtung 40, insbesondere deren Rollen 44, aus dem Bereich des oberen Randes 29 der Glastafel 26 zu bewegen, um diese in Richtung des Doppelpfeiles 31 umfallen zu lassen, so dass sie schließlich auf der Auflage 6 der Tischplatte 4 des Tisches 2 zu liegen kommt.

Dadurch, dass die Fördereinrichtung 22 und gegebenenfalls die Abstützeinrichtung 40 in Richtung der Pfeile 36 bzw. 50 verstellbar sind, also im wesentlichen quer zur Flächenerstreckung der Glasscheibe 26, kann die Lage einer Glasscheibe 26, nachdem sie in Richtung des Pfeiles 31 umfallen gelassen wird, auf dem Tisch 2 definiert werden, da so dem Umstand Rechnung getragen werden kann, dass kleinere Glasscheiben 26 auf dem Tisch 2 weniger weit "rutschen" als größere Glasscheiben 26.

Die beschriebene Vorrichtung kann zum Ausführen des erfindungsgemäßen Verfahrens beispielsweise wie folgt benützt werden:

Eine Glasscheibe 26, die aus einem Glaslager, einer Waschstrasse od.dgl. herantransportiert wird, wird mit ihrem unteren Rand 28 auf der Fördereinrichtung 22 aufstehend und mit ihrem oberen Rand 29 an der Abstützung 40, insbesondere deren Rollen 44 anliegend, in Richtung des Pfeiles 32 in die Vorrichtung transportiert. Nachdem die Glasscheibe 26, insbesondere ihr unterer Rand 28, durch entsprechendes Verstellen der unteren Transporteinrichtung 22 in Richtung des Doppelpfeiles 36 (ggf. wird auch die obere Abstützeinrichtung 40 in Richtung des Doppelpfeiles 50 verstellt) gegenüber dem Tisch 2 so ausgerichtet worden ist, dass die Glastafel 26, nachdem sie umfallen gelassen wird, auf dem Tisch 2 die gewünschte Lage einnimmt, wird der obere Rand 29 der Glasscheibe 26 durch Anheben der Abstützeinrichtung 40 freigegeben und die Glasscheibe 26 fällt in Richtung des Pfeiles 31 um. Es ist ersichtlich, insbesondere bei Betrachten der Fig. 1, dass die Glasscheibe 26 "nach hinten" umfällt, wobei eine Glasscheibe 26 so ausgerichtet wird, dass ihre "schönere" Seite 27, also die Seite der Glasscheibe 26, die ggf. eine Beschichtung aus Metall od.dgl. trägt, nach oben weist.

Nachdem eine Glasscheibe 26 auf der Auflage 6 der Tischplatte 4 des Tisches 2 liegt, kann sie durch nicht gezeigte Fördereinrichtungen, z.B. in den Auflagetisch 2 eingelassene Transportbänder oder Transportrollen, in Richtung ihrer Spur, die sie in der Ausgangslage einnimmt (Ausrichtung des unteren Randes 28 der Glasscheibe 26), also im wesentlichen senkrecht zur Bildebene von Fig. 1, abtransportiert werden. Es besteht aber auch die Möglichkeit, die Glasscheibe in Richtung von der unteren Fördereinrichtung 22 weg vom Tisch 2 wegzubewegen (also quer zum unteren Rand 28, d.h. nach rechts der Fig. 1), um sie zu einer nachgeschalteten Vorrichtung 18 zu bewegen.

Wenn an einen Abtransport der Glasscheibe 26 quer zur Bildebene von Fig. 1 nicht gedacht ist, können die Führung 54 für die Schlitten 52 auch im Bereich des Tisches 2 angeordnet sein.

Zusammenfassend kann ein Ausführungsbeispiel der Erfindung wie folgt beschrieben werden:

Um eine Glastafel 26 aus einer gegenüber der Lotrechten etwas geneigten Stellung in eine im wesentlichen horizontale Stellung umfallen zu lassen, wird die Glasscheibe 26 mit ihrem unteren Rand 28 auf einer Fördereinrichtung 22 aufstehend und mit ihrem oberen Rand 29 gegen eine Abstützeinrichtung 40 anliegend in eine Ausgangslage bewegt. Durch Wegbewegen der Abstützeinrichtung 40 vom oberen Rand 29 der Glasscheibe 26 wird diese nach hinten umfallen gelassen, so dass sie auf der Auflagefläche eines Tisches 2 zu liegen kommt. Von dieser Auflagefläche, die als Luftkissen oder als Feld mit Transportriemen oder -rollen ausgebildet sein kann, kann eine Glasscheibe 26, die mit ihrer "schöneren" Seite 27 nach oben weist, einer weiteren Behandlung, beispielsweise einer nachgeschalteten Vorrichtung 18, zugeführt werden.

## Patentansprüche

1. Verfahren zum Umlegen von Glasscheiben (26) aus einer Ausgangslage, in der die Glasscheiben (16) gegenüber der Lotrechten geringfügig schräggestellt ist, in eine im wesentlichen horizontale Lage, wobei, die Glasscheibe (26) im Bereich ihres oberen Randes (29), durch eine Abstützung (40,44), die auf der nach unten weisenden Seite der Glasscheibe (26) anliegt, abgestützt wird, **dadurch gekennzeichnet, dass** die Glasscheibe (26) nach dem Wegbewegen der Abstützung (40,44) aus dem Bereich des oberen Randes (29) auf eine Auflagefläche (2) hin umfallen gelassen wird.

2. Verfahren nach Anspruch 1, **dadurch gekennzeichnet, dass** die Glasscheibe (26), ohne sie zunächst in eine lotrechte Lage auszurichten, umfallen gelassen wird.

3. Verfahren nach Anspruch 1 oder 2, **dadurch gekennzeichnet, dass** die Glasscheibe (26) mit ihrem unteren Rand (28) auf einer Fördereinrichtung (22) aufstehend in die Ausgangslage bewegt wird.

4. Verfahren nach einem der Ansprüche 1 bis 3, **dadurch gekennzeichnet, dass** die Glasscheibe (26) mit ihrem oberen Rand (29) an einer Abstützeinrichtung (40) anliegend in die Ausgangslage bewegt wird.

5. Verfahren nach einem der Ansprüche 1 bis 4, **dadurch gekennzeichnet, dass** wenigstens der Abstand des unteren Randes (28) der Glasscheibe (26) in einem vorbestimmten Abstand von der Auflagefläche (2), auf der die Glasscheibe (26) nach dem Umfallenlassen liegt, ausgerichtet wird.

6. Verfahren nach Anspruch 5, **dadurch gekennzeichnet, dass** die Glasscheibe (26) mit ihrem unteren Rand durch Verstellen der Transporteinrichtung (22) quer zur Längserstreckung des unteren Randes (28) der Glasscheibe (26) ausgerichtet wird.

7. Verfahren nach einem der Ansprüche 1 bis 6, **dadurch gekennzeichnet, dass** die Glasscheibe (26) durch Verstellen ihres oberen Randes (29) quer zur Längserstreckung des oberen Randes (29) ausgerichtet wird.

8. Vorrichtung zum Umlegen von Glasscheiben (26) aus einer gegenüber der Lotrechten geringfügig geneigten Lage in eine im wesentlichen horizontale Lage, enthaltend einen Auflagetisch (2) für Glastafeln (26) in ihrer im wesentlichen horizontalen Lage, und eine Abstützeinrichtung (40,44) für den oberen Rand (29) der Glasscheibe (26), **dadurch gekennzeichnet, dass** die Abstützeinrichtung (40) für den oberen Rand (29) der Glasscheibe (26) zum Freigeben des oberen Randes (29) aus dem Bereich dieses Randes (29) wegbewegbar ist, und dass die Vorrichtung eine Fördereinrichtung (22) für den unteren horizontalen Rand (28) der Glasscheibe (26) enthält.

9. Vorrichtung nach Anspruch 8, **dadurch gekennzeichnet dass**, die Abstützeinrichtung (40) nach oben abhebbar ist.

10. Vorrichtung nach Anspruch 8 oder 9, **dadurch gekennzeichnet dass**, die Transporteinrichtung (22) quer zur Spur der in ihrer Ausgangslage stehenden Glasscheibe (26) (unterer Rand 28 derselben) verstellbar ist (Pfeil 36).

11. Vorrichtung nach einem der Ansprüche 8 bis 10, **dadurch gekennzeichnet dass**, die Abstützeinrichtung (40) quer zur Längserstreckung des oberen Randes (29) der Glasscheibe (Pfeil 50) verstellbar ist.

12. Vorrichtung nach einem der Ansprüche 8 bis 11, **dadurch gekennzeichnet dass**, die Abstützeinrichtung (40) für den oberen Rand (29) der Glasscheibe einen Balken (42) aufweist, der mit Rollen (44) bestückt ist.

13. Vorrichtung nach Anspruch 12, **dadurch gekennzeichnet dass**, die Rollen (44) vom Balken (42) nach unten weisend angeordnet sind.

14. Vorrichtung nach Anspruch 12 oder 13, **dadurch gekennzeichnet dass**, die Rollen (44) frei drehbare Rollen sind.

15. Vorrichtung nach einem der Ansprüche 12 bis 14, **dadurch gekennzeichnet dass**, der Balken (42) über einen Schlitten (48) in horizontaler Richtung (Pfeil 50) verstellbar ist.

16. Vorrichtung nach Anspruch 15, **dadurch gekennzeichnet dass**, die Schlitten (48) für den Balken (42) auf im wesentlichen horizontalen Führungen (46) verstellbar sind.

17. Vorrichtung nach Anspruch 16, **dadurch gekennzeichnet dass**, die horizontale Führung (46) der Abstützung (40) über Schlitten (52) an lotrechten Führungen (54) verstellbar ist.

18. Vorrichtung nach einem der Ansprüche 8 bis 17, **dadurch gekennzeichnet dass**, die Auflagefläche (2) wenigstens im Bereich ihres von der Fördereinrichtung (22) entfernten Randes (14) anhebbar ist.

19. Vorrichtung nach einem der Ansprüche 8 bis 18, **dadurch gekennzeichnet dass**, die Fördereinrichtung (22) ein Förderband (24) aufweist.

20. Vorrichtung nach einem der Ansprüche 8 bis 18, **dadurch gekennzeichnet dass**, die Fördereinrichtung (22) eine Rollenzeile drehangetriebener Rollen aufweist.

21. Vorrichtung nach einem der Ansprüche 8 bis 20, **dadurch gekennzeichnet dass**, die Fördereinrichtung (22) auf Führungen (34) verschiebbar (Pfeil 36) ist.

22. Vorrichtung nach einem der Ansprüche 8 bis 21, **dadurch gekennzeichnet dass**, die Fördereinrichtung (22) eine Führung (30) für den unteren Rand (28) der Glasscheibe (26) aufweist.

23. Vorrichtung nach Anspruch 22, **dadurch gekennzeichnet dass**, die Führung (30) quer zur Fördereinrichtung (22) verstellbar ist.

## Claims

1. Process for transferring glass panes (26) out of an initial position in which the glass pane (16) is slightly tilted relative to the vertical, into an essentially horizontal position, whereby the glass pane (26) in the area of its upper edge (29) is supported by a support (40, 44) which lies on the side of the glass pane (26) which points down, **characterized in that** the glass pane (26) after the support (40, 44) has been moved away out of the area of the upper edge (29) is allowed to fall over onto a support surface (2).

2. Process as claimed in claim 1, **characterized in that** the glass pane (26) is allowed to fall over without first aligning it into the vertical position.

3. Process as claimed in claim 1 or 2, **characterized in that** the glass pane (26) with its lower edge (28) standing up on a conveyor device (22) is moved into the initial position.

4. Process as claimed in one of claims 1 to 3, **characterized in that** the glass pane (26) with its upper edge (29) adjoining the support means (40) is moved into the initial position.

5. Process as claimed in one of claims 1 to 4, **characterized in that** at least the distance of the lower edge (28) of the glass pane (26) is aligned at a predetermined distance from the support surface (2) on which the glass pane (26) lies after being allowed to fall over.

6. Process as claimed in claim 5, **characterized in that** the glass pane (26) with its lower edge is aligned by moving the transport means (22) transversely to the lengthwise extension of the lower edge (28) of the glass pane (26).

7. Process as claimed in one of claims 1 to 6, **characterized in that** the glass pane (26) is aligned by moving its upper edge (29) transversely to the lengthwise extension of the upper edge (29).

8. Device for transferring glass panes (26) out of a position which is slightly titled relative to the vertical into an essentially horizontal position, comprising a support table (2) for glass sheets (26) in their essentially horizontal position and a support means (40, 44) for the upper edge (29) of the glass pane (26), **characterized in that** the support means (40) for the upper edge (29) of the glass pane (26) for releasing the upper edge (29) can be moved away out of the area of this edge (29), and that the device comprises a conveyor device (22) for the lower horizontal edge (28) of the glass pane (26).

9. Device as claimed in claim 8, **characterized in that** the support means (40) can be raised.

10. Device as claimed in claim 8 or 9, **characterized in that** the transport means (22) can be moved transversely to the track of the glass pane (26) which is standing in its initial position (lower edge 28 of the pane) (arrow 36).

11. Device as claimed in one of claims 8 to 10, **characterized in that** the support means (40) can be moved transversely to the lengthwise extension of the upper edge (29) of the glass pane (arrow 50).

12. Device as claimed in one of claims 8 to 11, **characterized in that** the support means (40) for the top edge (29) of the glass pane has a beam (42) which is equipped with rollers (44).

13. Device as claimed in claim 12, **characterized in that** the rollers (44) are arranged pointing down from the beam (42).

14. Device as claimed in claim 12 or 13, **characterized in that** the rollers (44) are freely rotating rollers.

15. Device as claimed in one of claims 12 to 14, **characterized in that** the beam (42) can be moved via a carriage (48) in the horizontal direction (arrow 50).

16. Device as claimed in claim 15, **characterized in that** the carriages (48) for the beam (42) can be moved on essentially horizontal guides (46).

17. Device as claimed in claim 16, **characterized in that** the horizontal guide (46) of the support (40) can be moved via carriages (52) on vertical guides (54).

18. Device as claimed in one of claims 8 to 17, **characterized in that** the support surface (2) can be raised at least in the area of its edge (14) away from the conveyor devices (22).

19. Device as claimed in one of claims 8 to 18, **characterized in that** the conveyor device (22) has a conveyor belt (24).

20. Device as claimed in one of claims 8 to 18, **characterized in that** the conveyor device (22) has a line of rotary drive rollers.

21. Device as claimed in one of claims 8 to 20, **characterized in that** the conveyor device (22) can be moved on guides (34) (arrow 36).

22. Device as claimed in one of claims 8 to 21, **characterized in that** the conveyor means (22) has a guide (30) for the lower edge (28) of the glass pane (26).

23. Device as claimed in claim 22, **characterized in that** the guide (30) can be moved transversely to the conveyor device (22).

## Revendications

1. Procédé pour faire passer des feuilles de verre (26) d'une position initiale dans laquelle elles sont légèrement inclinées par rapport à la verticale, à une position essentiellement horizontale, la feuille de verre (26) étant appuyée dans la zone de son bord supérieur (29) contre un soutien (40, 44), en contact avec la face de la feuille de verre regardant "vers le bas", **caractérisé en ce que** la feuille de verre (26), après que le soutien (40, 44) ait été éloigné de la zone du bord supérieur (29), est abandonnée à sa chute qui la fait tomber sur une surface de dépôt (2).

2. Procédé selon la revendication 1, **caractérisé en ce que** la feuille de verre (26) est abandonnée à sa chute sans avoir été amenée d'abord dans une position verticale.

3. Procédé selon la revendication 1 ou 2, **caractérisé en ce que** la feuille de verre (26) est amenée à la position initiale en étant dressée par son bord inférieur (28) sur un dispositif de transport (22).

4. Procédé selon une des revendications 1 à 3, **caractérisé en ce que** la feuille de verre (26) est amenée à la position initiale avec son bord supérieur (29) appliqué sur un dispositif de soutien (40).

5. Procédé selon une des revendications 1 à 4, **caractérisé en ce qu'**au moins le bord inférieur (28) de la feuille de verre (26) est aligné à une distance prédéfinie de la surface de dépôt sur laquelle repose la feuille de verre (26) après sa chute.

6. Procédé selon la revendication 5, **caractérisé en ce que** la feuille de verre (26) est, par son bord inférieur, alignée par déplacement du dispositif de transport (22) perpendiculairement à la direction longitudinale du bord inférieur (28) de la feuille de verre (26).

7. Procédé selon une des revendications 1 à 6, **caractérisé en ce que** la feuille de verre (26), par déplacement de son bord supérieur (29), est alignée perpendiculairement à la direction longitudinale de ce bord.

8. Dispositif pour faire passer des feuilles de verre (26) d'une position légèrement inclinée par rapport à la verticale à une position essentiellement horizontale, comprenant une table de dépôt (2) pour accueillir les feuilles de verre (26) dans leur position essentiellement horizontale, ainsi qu'un dispositif de soutien (40, 44) pour le bord supérieur (29) de la feuille de verre (26), **caractérisé en ce que** le dispositif de soutien (40) du bord supérieur (29) peut être écarté de la zone de ce bord pour libérer la feuille de verre, et qu'il est prévu un dispositif de transport (22) pour le bord horizontal inférieur (28) de la feuille de verre (26).

9. Dispositif selon la revendication 8, **caractérisé en ce que** le dispositif de soutien (40) peut être élevé vers le haut.

10. Dispositif selon la revendication 8 ou 9, **caractérisé en ce que** le dispositif de transport (22) peut être déplacé (flèche 36) perpendiculairement à la trace de la feuille de verre (26) occupant sa position initiale (bord inférieur (28) de la feuille).

11. Dispositif selon une des revendications 8 à 10, **caractérisé en ce que** le dispositif de soutien (40) peut être déplacé (flèche 50) perpendiculairement à la dimension longitudinale du bord supérieur (29) de la feuille de verre.

12. Dispositif selon une des revendications 8 à 11, **caractérisé en ce que** le dispositif de soutien (40), du bord supérieur (29) de la feuille de verre, présente une poutre (42) qui est équipée de rouleaux (44).

13. Dispositif selon la revendication 12, **caractérisé en ce que** les rouleaux (44) partent de la poutre (42) vers le bas.

14. Dispositif selon la revendication 12 ou 13, **caractérisé en ce que** les rouleaux (44) tournent librement.

15. Dispositif selon la revendication 12 à 14, **caractérisé en ce que** la poutre (42) peut se déplacer en direction horizontale (flèche 50) par l'intermédiaire d'un chariot (48).

16. Dispositif selon la revendication 15, **caractérisé en ce que** les chariots (48) de la poutre (42) peuvent se déplacer sur des guidages (46) essentiellement horizontaux.

17. Dispositif selon la revendication 16, **caractérisé en ce que** le guidage horizontal (46) du soutien (40) peut se déplacer sur des guidages verticaux (54) par l'intermédiaire de chariots (52).

18. Dispositif selon une des revendications 8 à 17, **caractérisé en ce que** la surface de dépôt (2) peut être soulevée au moins dans la zone de son bord (14) éloigné du dispositif de transport (22).

19. Dispositif selon une des revendications 8 à 18, **caractérisé en ce que** le dispositif de transport (22) comporte une bande transporteuse (24).

20. Dispositif selon une des revendications 8 à 18, **caractérisé en ce que** le dispositif de transport (22) comprend une rangée de rouleaux entraînés en rotation.

21. Dispositif selon une des revendications 8 à 20, **caractérisé en ce que** le dispositif de transport (22) peut coulisser (flèche 36) sur des guidages (34).

22. Dispositif selon une des revendications 8 à 21, **caractérisé en ce que** le dispositif de transport (22) comprend un guidage (30) pour le bord inférieur (28) de la feuille de verre (26).

23. Dispositif selon la revendication 22, **caractérisé en ce que** le guidage (30) peut se déplacer perpendiculairement au dispositif de transport (22).
